# EUROPÄISCHE PATENTSCHRIFT

(11) **EP 1 797 771 B1**
(45) Veröffentlichungstag und Bekanntmachung des Hinweises auf die Patenterteilung: **15.07.2020**
(21) Anmeldenummer: 06026038.7
(22) Anmeldetag: 15.12.2006
(51) Int. Cl.: A23K 20/147, A23K 40/10, A23K 50/42, A23K 50/48

(54) **Trockener Instant-Sossengrundstoff und Herstellungsverfahren eines Instant-Sossengrundstoffes**
Dry instant sauce and process for its preparation
Sauce instantanée sèche et procédé de préparation de ladite sauce

(30) Priorität: 16.12.2005 DE 10560741
(43) Veröffentlichungstag der Anmeldung: 20.06.2007
(73) Patentinhaber: Erbacher GmbH & Co Betriebs KG, 83924 Kleinheubach (DE)
(72) Erfinder: Lepper, Markus, 63924 Kleinheubach (DE); Wörner, Martin, Dr., 63916 Amorbach (DE)
(74) Vertreter: Nitz, Astrid

(56) Entgegenhaltungen:
- EP-A- 0 695 507
- EP-A- 0 695 508
- WO-A-02/069735
- AT-B- 410 623
- AU-A- 1 374 170
- FR-A- 2 482 427
- US-A1- 3 119 691

## Beschreibung

Die Erfindung betrifft einen trockenen Instant-Soßengrundstoff, ein Herstellungsverfahren für den Soßengrundstoff und die Verwendung des Soßengrundstoffes.

Bekannt sind Trocken- und Dosenfutter für Heimtiere in verschiedenen Geschmacksrichtungen und für verschiedene Altersgruppen. Insbesondere für Tierbsitzer die einen weiten Weg zur nächsten Einkaufsmöglichkeit haben oder die in kleinen Wohnungen leben, ist das Dosenfutter, dass den Tieren gut schmeckt, einen Belastung wegen des hohen Gewichts und/oder des großen Lagerraumbedarfs. Der Rückgriff auf das Trockenfutter ist zwar für viele Besitzer vorteilhaft, aber manche ältere oder auch sehr junge Tiere haben Probleme, dass härtere Futter aufzunehmen.

Instant-Soßengrundstoffe sind zum Beispiel in AU 13 741 70, US 3 119 691, FR 2 482 427 oder AT 410 623 offenbart.

Aufgabe der vorliegenden Erfindung ist es daher, ein Futterergänzungsmittel bereitzustellen, das an verschiedene Bedürfnisse leicht anpassbar ist und wodurch es auch Tieren mit hohen Ansprüchen an die Futtereigenschaften ermöglicht wird, schmackhafte und einfach zu transportierende Nahrung zu erhalten.

Die Aufgabe wird gelöst durch einen trockenen Instant-Soßengrundstoff, insbesondere pulverförmig und/oder granuliert mit einem Anteil von 16% aus tierischem und/oder pflanzlichem Eiweiß und/oder Eiweißhydralysat und mit einem Anteil von 28% an tierischem und/oderpflanzlichem Fett, mit einem Anteil von 0,2% an Rohfaser, und 5-50% gelbildende Komponente, wobei der Soßengrundstoff bei Vermischung mit einem vorbestimmten Wasseranteil im Bereich der Raumtemperatur eine hydrokolloidale Dispersion bildet, welche nach Art einer Soße zu einem Haustierfutter mit Festbestandteilen zugebbar ist.

Durch den zunächst trockenen Soßengrundstoff wird es ermöglicht, dass im Zusammenspiel mit Trockenfutter eine sehr raumsparende Grundlage für die Zubereitung von Tierfutter mit langer Haltbarkeit zu erreichen. Die Zubereitung ist aufgrund der vorbestimmten Menge an zugesetzter Flüssigkeit und der einfachen Zubereitung ohne zu Kochen bei Raumtemperatur, einfach und zuverlässig für jeden Tierbesitzer anzuwenden. Hierdurch ist auch eine sehr vitaminschonende Zubereitung möglich. Unterschiedliche Wasseranteile können auf einfache Weise den Geschmack und die Intensität beeinflussen. Soßengrundstoff und Flüssigkeit, insbesondere Wasser, wird zur Herstellung einer Soße in einer vorteilhaften Ausführungsform im Verhältnis von etwa 1:5 bis etwa 1:20 vermischt.

Die sich bildende hydrokolloidale Dispersion verhindert eine inhomogene Benetzung und unzureichende Darreichung des Haustierfutters. Die hierdurch gebildete gelartige Soße ist somit neben ihrem guten Geschmack auch über eine längere Zeit in dem Futternapf mischungsstabil.

Durch den Soßengrundstoff kann das Haustierfutter mit Festbestandteilen sehr variabel mit unterschiedlichen Geschmackrichtungen versehen werden, ohne dass eine großer Lagerraum notwendig ist. Unterschiedliche Haustiere können so lediglich durch den Wechsel des Soßengrundstoffes versorgt werden. Durch eine entsprechende Einwirkzeit kann der Festigkeitsgrad des Futters variabel eingestellt werden, so dass auch eine Anpassung an ältere und sehr junge Tiere möglich ist insbesondere auch im Sinne einer Schonkost.

Durch den hohen Eiweißanteil des Futters erhält diese eine sehr hohe Attraktivität für Tiere, insbesondere für Karnivoren. Der Fettanteil ist ebenso wie der Eiweißanteil über eine großen Bereich variabel und kann an die Bedürfnisse und Geschmäcker der Tiere leicht direkt bei der Herstellung angepasst werden. Durch den Festbestandteil im Haustierfutter wird zudem eine Zahnpflege ermöglicht, ohne dass auf Geschmack verzichtet werden müsste. Ein einmal akzeptiertes Festfutter kann durch einen Wechsel in dem Instant-Soßengrundstoff an unterschiedliche Situation wie Lebensalter, Belastung durch Krankheit oder Trächtigkeit angepasst werden.

In weiteren Ausführungsformen können besondere Nährsubstanzen in dem Soßengrundstoff eingegeben werden, insbesondere zur Vitaminergänzung, für ein glänzendes Fell, Knorpelaufbaustoffe, Stoffe zur Darmregulierung, Stoffe zur Hochleistungsunterstützung insbesondere im Sport, Energielieferanten, Stoffe zum Muskelaufbau, Stoffe zur Stärkung der Abwehrkräfte und des Immunsystems, appetitanregende, akzeptanzsteigernde, agilitätverbessernde Stoffe, Stoffe zur Unterstützung der Rekonvaleszenz und vieles mehr.

Vorteilhaft ist es, wenn der Eiweißanteil 16 % beträgt. Dabei ist eine optimale Mischung gegeben, die auch einen guten Geschmack und eine gute Verträglichkeit unterstützt.

Weiter vorteilhaft ist es, wenn ein Rohascheanteil von etwa 0 bis etwa 15%, insbesondere etwa 5 % enthalten ist.

Eine insbesondere bei Hunden bevorzugte Ausführungsform liegt vor, wenn 30% Milch und Molkereierzeugnisse, 10% Fleisch und tierische Nebenerzeugnisse, 39 % Soßenbildner, technische Hilfs-, Füll- und Farbstoffe eingesetzt sind. Hierdurch ist sowohl ein hoher Eiweißanteil gegeben, als auch ein guter Geschmack und eine stabile Konsistenz. Vorteilhaft ist es auch, wenn neben dem Soßenbildner sowie technische Hilfs-, Füll- und Farbstoffen entweder Milch und Molkereierzeugnisse oder Fleisch und tierische Nebenerzeugnisse vorhanden sind.

Vorteilhaft ist es, wenn der Eiweißanteil einen oder mehrere der folgenden Bestandteile insbesondere von einem oder mehreren der folgenden Lebewesen/Pflanzen umfasst: trockene, granulierte bis pulvrige Produkte tierischen und/oder pflanzlichen Ursprungs, insbesondere aus Fleisch, insbesondere Leber, Knochen, Blut, insbesondere von Rind, Schwein, Kaninchen, Hase, Ziege, Schaf, Lamm, Hirsch, Geflügel, insbesondere Geflügelproteinkonzentrate, Eipulver, insbesondere Eigelb- bzw. Eiweißpulver, verarbeitete Fleischprodukte, insbesondere Schinken, Bacon, Wurst, Salami, maritime Tiere, insbesondere Fische, insbesondere Thunfisch, Dorsch, Forelle, Lachs, Makrele, Hering, Arktischer Weissfisch, Shrimps, Hummer, Krill, Muschel, Grünlippmuschel, Tintenfisch, Pulver aus Milchprodukten, insbesondere Molke, Permeate, Sauermilch, Buttermilch, Hydrolysat von Pflanzenprotein, insbesondere Hefe, Geflügel bzw. Geflügelleber, insbesondere von Truthahn, Huhn, Ente, Gans, Blutbestandteile, insbesondere Hämoglobien, Plasma, Globin, insbesondere in Form von Blutmehl, insbesondere aus Getreide, insbesondere Griebenmehl, Proteinextrakte und isolierte Aminosäuren, Hühnerbrühe.

Eine ausgewogene Mischung wird erreicht, wenn der Fettanteil planzliches und/oder tierisches Fett umfasst, insbesondere mit einem oder mehreren der folgenden Bestandteilen: Geflügelfett, insbesondere Hühnerfett, Rindertalg, Schweineschmalz, Gänseschmalz, Hammeltalg, Fischöl, Lachsöl, Sojaöl, Sonnenblumenöl, Rapsöl, Leinöl, Distelöl, Olivenöl, Palmöl, Kokosöl, Sahnepulver, Käse.

Eine schmackhafte und gesunde Ausführungsform liegt vor, wenn natürliche Geschmacksverstärker einzusetzen sind, insbesondere Hefen und/oder Hefehydrolysate und/oder Pflanzenproteinhydrolysate.

Als ergänzende Zusatzstoffe sind vorteilhaft einer der folgenden Bestandteile oder mehrere der folgenden Bestandteile einzusetzen: Konservierungsmittel, insbesondere Sorbinsäure, Propionsäure, Buttersäure, Salze der Buttersäure, Milchsäure, Spurenelemente, insbesondere Salze, Chelate, Pflanzenextrakte, Probiotika, Prebiotika, Carnitin, Taurin, Enzyme, Maltodextrin und/oder Aromen, Vitamine, Mineralien, Zucker, insbesondere Saccharose, Glucose, Farbstoffe, Säureregulatoren, insbesondere Phosphate, Glycerin, Emulgatoren, insbesondere Lezithin, zugesetzt sind. Sie erfüllen unterschiedliche Funktionen, wobei insbesondere Haltbarmachung, Stabilisierung oder Geschmackverbesserung wichtig sind.

Um die Konsistenz der Soße zu verbessern, ist es vorteilhaft, wenn Verdickungsmittel, insbesondere eines oder mehere der folgenden Verdickungsmittel einzusetzen sind: Hydrocollidoide, Guarkernmehl, Xanthan, Alginate, Cellulosen, mikrokristalline Cellulose, CMC und weitere Cellulosederivate, modifizierte Stärken, Johannisbrotkernmehl, Gummi arabicum, Agar-Agar, Carragen, Cassia, Dextrane, Gellangummi, Pektine, Traganth.

Vorteilhaft ist es, wenn der Soßengrundstoff dargereicht wird in Form von Pulver, insbesondere in Streudosen, in Form von quellenden Komprimaten, insbesondere mit Zerfallsbeschleuniger, fertig eingemischt in Futtergrundstoff oder als als Füllung eines Futtergrundstoffes. Durch die Streudosen ist er leicht und individuell zu dosieren und bleibt streufähig. Die Verwendung von quellenden Komprimaten erleichtert die Beimischung. Es kann auch eine Vorratsvorbereitung der trockenen Mischung vorgenommen werden oder der Soßengrundstoff direkt beim Hersteller in das Innere eines Futtergrundstoffes eingebracht werden.

Die Aufgabe wird gelöst durch ein Herstellungsverfahren eines Soßengrundstoffes nach einem der Ansprüche 1 bis 4, wobei die Zutaten im trockenen Zustand und/oder als Flüssigkeit zu mischen sind, wobei insbesondere eine Auflösung der Bestandteile des Soßengrundstoffes in einer Flüssigkeit und anschließend eine Trocknung erfolgen kann, insbesondere eine Sprühtrocknung.

Vorteilhaft ist es, wenn der Soßengrundstoff zu granulieren, agglomerieren, instantisieren, aufgranulieren, ist, insbesondere auf einen Träger aufzuziehen, oder in Form von Preßlingen herzustellen ist.

Die Aufgabe wird ebenfalls gelöst durch eine Verwendung eines Soßengrundstoffes nach einem der Ansprüche 1 bis 4, insbesondere hergestellt nach einem Herstellungsverfahren nach einem der Ansprüche 5 oder 6, wobei der Soßengrundstoff trocken über einen Futtergrundstoff, insbesondere über Extrudate, zu streuen ist und anschließend Wasser hinzuzufügen ist.

Eine einfache und zuverlässige Zubereitungsart liegt vor, wenn der Soßengrundstoff in Wasser angerührt wird und anschließend über einen Futtergrundstoff, gegeben wird.

Insbesondere vorteilhaft ist es, wenn Soßengrundstoff und Wasser zur Herstellung einer Soße im Verhältnis von etwa 1:5 bis etwa 1:20, insbesondere 1:10 vermischt werden. Die starke Konzentrierung des Soßengrundstoffes bewirkt eine hohe Einsparung an Gewicht und Lagerplatz.

Vorteilhaft ist es, wenn als Futtergrundstoff Trockenfutter, insbesondere ein Extrudat und/oder Flocken und/oder Flockenmixe, und/oder Dosenfutter und/oder Tischreste, insbesondere Nudeln, und/oder Arzneifutter einzusetzen ist.

Vorteilhaft ist es, wenn der Soßengrundstoff als Überzug auf einem Futtergrundstoff, insbesondere über Extrudaten und/oder Flocken einzusetzen ist.

Eine gute Geschmacksabrundung ist gegeben, wenn Futtergrundstoff und Soßengrundstoff im Verhältnis 10:1 zu verwenden sind.

Eine große Anwendungsbreite ist gegeben, wenn der Soßengrundstoff einzusetzen ist für Karnivoren und/oder Omnivoren, insbesondere für Hund, Katze, Marder, Frettchen, Minipig, Igel, Fuchs.

Weitere Merkmale und Vorteile der Erfindung ergeben sich aus den Ansprüchen und der nachstehenden Beschreibung, in der Ausführungsbeispiele des Gegenstands der Erfindung näher erläutert sind.

Ein trockener Instant-Soßengrundstoff umfasst vorteilhaft etwa 16% Rohprotein, etwa 28 % Rohfett, etwa 0,2 % Rohfaser und etwa 5 % Rohasche und umfasst pflanzliche Haupt- und Nebenerzeugnisse und/oder Milch- und Molkereierzeugnisse und/oder Öle und/oder Fette und/oder Fleischerzeugnisse. Ein Esslöffel trockener Instant-Soßengrundstoff wird mit etwa 100 ml warmen, insbesondere bis 60° C, oder kalten Wasser vermengt und zu etwa 100 bis 200 g Trockenfutter gegeben. Dabei wird vorteilhaft der Soßengrundstoff über das Futter gegeben und anschließend das Wasser hinzugefügt. Es kann aber auch zuerst die Vermischung von Wasser und Soßengrundstoff stattfinden und dann die Soße über das Futter gegeben werden.

## Patentansprüche

1. Trockener Instant-Soßengrundstoff, insbesondere pulverförmig und/oder granuliert mit einem Anteil von 16% aus tierischem und/oder pflanzlichem Eiweiß und/oder Eiweißhydralysat und mit einem Anteil von 28% an tierischem und/oder pflanzlichem Fett, mit einem Anteil von 0,2% an Rohfaser, und 5-50% gelbildende Komponente, wobei der Soßengrundstoff bei Vermischung mit einem vorbestimmten Wasseranteil im Bereich der Raumtemperatur eine hydrokolloidale Dispersion bildet, welche nach Art einer Soße zu einem Haustierfutter mit Festbestandteilen zugebbar ist.

2. Soßengrundstoff nach Anspruch 1, **dadurch gekennzeichnet, dass** ein Rohascheanteil von etwa 0 bis etwa 15%, insbesondere etwa 5 % enthalten ist und/oder 30% Milch und Molkereierzeugnisse und/oder 10% Fleisch und tierische Nebenerzeugnisse und 39 % Soßenbildner, technische Hilfs-, Füll- und Farbstoffe eingesetzt sind.

3. Soßengrundstoff nach einem der Ansprüche 1 oder 2, **dadurch gekennzeichnet, dass** der Eiweißanteil einen oder mehrere der folgenden Bestandteile insbesondere von einem oder mehreren der folgenden Lebewesen/Pflanzen umfasst: trockene, granulierte bis pulvrige Produkte tierischen und/oder pflanzlichen Ursprungs, insbesondere aus Fleisch, insbesondere Leber, Knochen, Blut, insbesondere von Rind, Schwein, Kaninchen, Hase, Ziege, Schaf, Lamm, Hirsch, Geflügel, insbesondere Geflügelproteinkonzentrate, Eipulver, insbesondere Eigelb- bzw. Eiweißpulver, verarbeitete Fleischprodukte, insbesondere Schinken, Bacon, Wurst, Salami, maritime Tiere, insbesondere Fische, insbesondere Thunfisch, Dorsch, Forelle, Lachs, Makrele, Hering, Arktischer Weissfisch, Shrimps, Hummer, Krill, Muschel, Grünlippmuschel, Tintenfisch, Pulver aus Milchprodukten, insbesondere Molke, Permeate, Sauermilch, Buttermilch, Hydrolysat von Pflanzenprotein, insbesondere Hefe, Geflügel bzw. Geflügelleber, insbesondere von Truthahn, Huhn, Ente, Gans, Blutbestandteile, insbesondere Hämoglobien, Plasma, Globin, insbesondere in Form von Blutmehl, insbesondere aus Getreide, insbesondere Griebenmehl, Proteinextrakte und isolierte Aminosäuren, Hühnerbrühe und/oder der Fettanteil planzliches und/oder tierisches Fett umfasst, insbesondere mit einem oder mehreren der folgenden Bestandteilen: Geflügelfett, insbesondere Hühnerfett, Rindertalg, Schweineschmalz, Gänseschmalz, Hammeltalg, Fischöl, Lachsöl, Sojaöl, Sonnenblumenöl, Rapsöl, Leinöl, Distelöl, Olivenöl, Palmöl, Kokosöl, Sahnepulver, Käse und/oder natürliche Geschmacksverstärker einzusetzen sind, insbesondere Hefen und/oder Hefehydrolysate und/oder Pflanzenproteinhydrolysate und/oder einer der folgenden Bestandteile oder mehrere der folgenden Bestandteile einzusetzen sind: Konservierungsmittel, insbesondere Sorbinsäure, Propionsäure, Buttersäure, Salze der Buttersäure, Milchsäure, Spurenelemente, insbesondere Salze, Chelate, Pflanzenextrakte, Probiotika, Prebiotika, Carnitin, Taurin, Enzyme, Maltodextrin und/oder Aromen, Vitamine, Mineralien, Zucker, insbesondere Saccharose, Glucose, Farbstoffe, Säureregulatoren, insbesondere Phosphate, Glycerin, Emulgatoren, insbesondere Lezithin, zugesetzt sind und/oder Verdickungsmittel, insbesondere eines oder mehrere der folgenden Verdickungsmittel einzusetzen sind: Hydrocollidoide, Guarkernmehl, Xanthan, Alginate, Cellulosen, mikrokristalline Cellulose, CMC und weitere Cellulosederivate, modifizierte Stärken, Johannisbrotkernmehl, Gummi arabicum, Agar-Agar, Carragen, Cassia, Dextrane, Gellangummi, Pektine, Traganth.

4. Soßengrundstoff nach einem der Ansprüche 1 bis 3, **dadurch gekennzeichnet, dass** der Soßengrundstoff dargereicht wird in Form von Pulver, insbesondere in Streudosen, in Form von quellenden Komprimaten, insbesondere mit Zerfallsbeschleuniger, fertig eingemischt in Futtergrundstoff oder als Füllung eines Futtergrundstoffes.

5. Herstellungsverfahren eines Soßengrundstoffes nach einem der Ansprüche 1 bis 4, **dadurch gekennzeichnet, dass** die Zutaten im trockenen Zustand und/oder als Flüssigkeit zu mischen sind, wobei insbesondere eine Auflösung der Bestandteile des Soßengrundstoffes in einer Flüssigkeit und anschließend eine Trocknung erfolgen kann, insbesondere eine Sprühtrocknung.

6. Herstellungsverfahren nach Anspruch 5, **dadurch gekennzeichnet, dass** der Soßengrundstoff zu granulieren, agglomerieren, instantisieren, aufgranulieren, ist, insbesondere auf einen Träger aufzuziehen, oder in Form von Preßlingen herzustellen ist.

7. Verwendung eines Soßengrundstoffes nach einem der Ansprüche 1 bis 4, insbesondere hergestellt nach einem Herstellungsverfahren nach einem der Ansprüche 5 oder 6, **dadurch gekennzeichnet, dass** der Soßengrundstoff trocken über einen Futtergrundstoff, insbesondere über Extrudate, zu streuen ist und anschließend Wasser hinzuzufügen ist.

8. Verwendung nach Anspruch 7, **dadurch gekennzeichnet, dass** der Soßengrundstoff in Wasser angerührt wird und anschließend über einen Futtergrundstoff, gegeben wird.

9. Verwendung eines Soßengrundstoffes nach einem der Ansprüche 7 oder 8, **dadurch gekennzeichnet, dass** Soßengrundstoff und Wasser zur Herstellung einer Soße im Verhältnis von etwa 1:5 bis etwa 1:20, insbesondere 1:10 vermischt werden.

10. Verwendung nach einem der Ansprüche 7 bis 9, **dadurch gekennzeichnet, dass** als Futtergrundstoff Trockenfutter, insbesondere ein Extrudat und/oder Flocken und/oder Flockenmixe, und/oder Dosenfutter und/oder Tischreste, insbesondere Nudeln, und/oder Arzneifutter einzusetzen ist und/oder der Soßengrundstoff als Überzug auf einem Futtergrundstoff, insbesondere über Extrudaten und/oder Flocken einzusetzen ist und/oder Futtergrundstoff und Soßengrundstoff im Verhältnis 10:1 zu verwenden sind.

11. Verwendung nach einem der Ansprüche 7 bis 10, **dadurch gekennzeichnet, dass** der Soßengrundstoff einzusetzen ist für Karnivore und/oder Omnivore, insbesondere Hund, Katze, Marder, Frettchen, Minipig, Igel, Fuchs.

## Claims

1. Dry instant sauce base material, in particular powdered and/or granulated, containing 16% of animal and/or vegetable protein and/or protein hydroxide and containing 28% of animal and/or vegetable fat, containing 0. 2% of crude fibre, and 5-50% of gel-forming component, the sauce base material being mixed with a predetermined proportion of water in the range of room temperature forms a hydrocolloidal dispersion, which can be added to a pet food with solid components in the form of a sauce.

2. Sauce base material according to claim 1, **characterized in that** a crude ash content of about 0 to about 15%, in particular about 5%, is contained and/or 30% milk and dairy products and/or 10% meat and animal by-products and 39% sauce former, technical auxiliaries, fillers and colorants are used.

3. Sauce base according to one of claims 1 or 2, **characterized in that** the protein portion comprises one or more of the following constituents, in particular from one or more of the following animals/plants: dry, granulated to powdery products of animal and/or plant origin, in particular from meat, in particular liver, bones, blood, in particular from beef, pork, rabbit, rabbit, goat, sheep, lamb, deer, poultry, in particular poultry protein concentrates, egg powder, in particular egg yolk or protein powder, processed meat products, especially ham, bacon, sausage, salami, marine animals, especially fish, especially tuna, cod, trout, salmon, mackerel, herring, arctic whitefish, shrimps, lobster, krill, mussel, green-lipped mussel, squid, powder from dairy products, especially whey, permeates, sour milk, buttermilk, hydrolysate of vegetable protein, especially yeast, poultry or Poultry liver, in particular of turkey, chicken, duck, goose, blood components, in particular haemoglobin, plasma, globin, in particular in the form of blood meal, in particular from cereals, in particular greaves meal, protein extracts and isolated amino acids, chicken broth and/or the fat portion comprises vegetable and/or animal fat, in particular with one or more of the following components: poultry fat, in particular chicken fat, beef tallow, lard, goose lard, mutton tallow, fish oil, salmon oil, soya oil, sunflower oil, rapeseed oil, linseed oil, safflower oil, olive oil, palm oil, coconut oil, cream powdered cream, cheese and/or natural flavour enhancers, in particular yeasts and/or yeast hydrolysates and/or vegetable protein hydrolysates and/or one or more of the following components: Preservatives, in particular sorbic acid, propionic acid, butyric acid, salts of butyric acid, lactic acid, trace elements, in particular salts, chelates, plant extracts, probiotics, prebiotics, carnitine, taurine, enzymes, maltodextrin and/or flavours, vitamins, minerals, sugars, in particular sucrose, glucose, colourings, acidity regulators, in particular phosphates, glycerine, emulsifiers, in particular lecithin, are added and/or thickeners, in particular one or more of the following thickeners are to be used: hydrocollidoids, guar gum, xanthan gum, alginates, celluloses, microcrystalline cellulose, CMC and other cellulose derivatives, modified starches, locust bean gum, gum arabic, agar-agar, carrageenan, cassia, dextranes, gellan gum, pectins, tragacanth.

4. Sauce base material according to one of claims 1 to 3, **characterized in that** the sauce base material is presented in the form of powder, in particular in powdered cans, in the form of swelling grain primates, in particular with a disintegration accelerator, readily mixed into feed base material or as a filling of a feed base material.

5. Process for the production of a sauce base according to one of Claims 1 to 4, **characterized in that** the ingredients are to be mixed in the dry state and/or as a liquid, in particular a dissolution of the constituents of the sauce base in a liquid and subsequent drying, in particular spray drying.

6. A production method according to claim 5, **characterized in that** the sauce base material is to be granulated, agglomerated, instantiated, granulated, in particular to be drawn onto a carrier, or is to be produced in the form of compacts.

7. Use of a sauce base material according to one of claims 1 to 4, in particular produced according to a manufacturing process according to one of claims 5. Or 6, **characterized in that** the sauce base is to be spread dry over a feed base, in particular extrudates, and then liquid, in particular water, is to be added.

8. Use according to claim 7, **characterized in that** the sauce base is stirred in water and then added over a feed base.

9. Use of a sauce base according to one of claims 7 or 8, **characterized in that** sauce base and liquid, in particular water, are mixed in the ratio of about 1:5 to about 1:20, in particular 1:10, for the production of a sauce.

10. Use according to one of claims 7 to 9, **characterized in that** dry fodder, in particular an extrudate and/or flakes and/or flake mixes, and/or canned fodder and/or table scraps, in particular noodles, and/or medicinal fodder is to be used as fodder base material and/or the sauce base material is to be added as a coating on a fodder base material, in particular via extrudates and/or flakes and/or fodder base material and sauce base material are to be used in a ratio of 10:1.

11. Use according to one of claims 1 to 10, **characterized in that** the sauce base is to be used for carnivores and/or omnivores, in particular dogs, cats, martens, ferrets, minipigs, hedgehogs, foxes.

## Revendications

1. Matière de base pour sauce instantanée sèche, en particulier sous forme de poudre et/ou de granulés avec une proportion de 16 % de protéines animales et/ou végétales et/ou d'hydrates de protéines et avec une proportion de 28 % de graisses animales et/ou végétales, avec une proportion de 0,2 % de fibres brutes, et de 5 à 50 % de composant gélifiant, la matière de base pour sauce, lorsqu'elle est mélangée à une proportion prédéterminée d'eau dans la zone de la température ambiante, formant une dispersion hydrocolloïdale qui peut être ajoutée à la manière d'une sauce à un aliment pour animaux domestiques avec des composants solides.

2. Matériau de base pour sauce selon la revendication 1, **caractérisé en ce qu'**il contient une teneur en cendres brutes d'environ 0 à environ 15 %, en particulier environ 5 %, et/ou 30 % de lait et de produits laitiers et/ou 10 % de viande et de sous-produits animaux et 39 % de sauces, d'auxiliaires techniques, de charges et de colorants.

3. Sauce matière première selon l'une des revendications 1 ou 2, **caractérisée en ce que** la teneur en protéines comprend un ou plusieurs des ingrédients suivants, en particulier d'une ou plusieurs des plantes vivantes suivantes : produits secs, granulés à poudreux d'origine animale et/ou végétale, en particulier à partir de viande, en particulier du foie, des os, du sang, en particulier du bœuf, du porc, du lièvre, de la chèvre, dés moutons, de l'agneau, du cerf, de la volaille, en particulier des concentrés de protéines de volaille, en poudre d'oeufs, en particulier des jaunes d'œufs, des jaunes d'œufs, des jaunes d'œufs, poudre de protéines, produits carnés transformés, en particulier jambon, bacon, saucisse, salami, animaux marins, en particulier poissons, en particulier thon, morue, truite, saumon, maquereau, hareng, corségone arctique, crevettes, homard, krill, coquille, moule à lèvres verte, calmar, Poudre des produits de lait, en particulier le petit-lait, permeate, lait acide, petit lait, hydrolysat de la protéine de plantes, en particulier la levure, volaille ou. Foie de volaille, en particulier du dindon, de la poule, du canard, de l'oie, des éléments de sang, en particulier hémoglobine, le plasma, globin, en particulier sous forme de la farine de sang, en particulier des céréales, en particulier la farine de rillons, les extraits de protéine et les aminoacides isolés, le bouillon de poules et/ou la part de graisse la graisse végétale et/ou animale étreint, en particulier avec, un ou plusieurs les éléments suivants : la graisse de volaille, en particulier la graisse de poules, le suif de boeufs, saindoux, saindoux d'oies, suif de mouton, huile de poisson, huile de saumon, huile de soja, huile de tournesol, huile de colza, huile de lin, huile de carthame, huile d'olive, huile de palme, huile de coco, poudre de crème, fromage et/ou amplificateurs de goût naturels sont à commencer, en particulier des levures et/ou hydrolysats de levure et/ou hydrolysats de protéines végétales et/ou l'un des éléments suivants ou plusieurs des éléments suivants sont à commencer : des conservateurs, en particulier acide sorbique, acide propionique l'acide d'huile, au sel de l'acide d'huile, acide de lait, des éléments de traces, en particulier au sel, chelates, des extraits de plantes, probiotiques, prébiotiques, carnitine, taurine, enzymes, maltodextrine et/ou saveurs, vitamines, minéraux, sucre, en particulier Saccharose, le glucose, les colorants, les régulateurs d'acide, en particulier des phosphates, glycérine, émulsifiants , en particulier lécithine, sont ajoutés et/ou sont à commencer à la moyenne d'épaississement, en particulier un ou plusieurs les moyennes d'épaississement suivantes: hydrocollidoides, gomme de guar, gomme de xanthane, alginates, celluloses, cellulose microcristallins, CMC et autres dérivés de la cellulose , forces modifiées, farine de noyau de caroube, caoutchouc arabicum, agar-agar, carragen, cassia, dextrane, gomme de gellan, des pectines, traganth.

4. Matériau de base pour sauce selon l'une des revendications 1 à 3, **caractérisé en ce que** le matériau de base pour sauce se présente sous forme de poudre, en particulier dans des boîtes de conserve en poudre, sous forme de grains de primates gonflants, en particulier avec un accélérateur de désintégration, facilement mélangés dans le matériau de base pour aliments pour animaux ou comme remplissage d'un matériau de base pour aliments pour animaux.

5. Procédé de fabrication d'un fond de sauce selon l'une des revendications 1 à 4, **caractérisé en ce que** les ingrédients doivent être mélangés à l'état sec et/ou liquide, en particulier une dissolution des constituants du fond de sauce dans un liquide et un séchage ultérieur, en particulier un séchage par pulvérisation.

6. Procédé de production selon la revendication 5, **caractérisé en ce que** la matière de base de la sauce doit être granulée, agglomérée, instanciée, mise en granulés, en particulier être tirée sur un support, ou doit être produite sous forme de comprimés.

7. Utilisation d'une matière de base pour sauce selon l'une des revendications 1 à 4, en particulier produite selon un procédé de fabrication selon l'une des revendications 5. ou 6, **caractérisé en ce que** la base de la sauce doit être étalée à sec sur une base d'alimentation, en particulier des extrudats, puis du liquide, en particulier de l'eau, doit être ajouté.

8. Utilisation selon la revendication 7, **caractérisé en ce que** la base de la sauce est mélangée à de l'eau puis ajoutée à une base d'aliments pour animaux.

9. Utilisation d'une base de sauce selon l'une des revendications 7 ou 8, **caractérisée en ce que** la base de sauce et le liquide, en particulier l'eau, sont mélangés dans le rapport d'environ 1:5 à environ 1:20, en particulier 1:10, pour la production d'une sauce.

10. Utilisation selon l'une des revendications 7 à 9, **caractérisée en ce qu'**il faut utiliser comme matière de base du fourrage un fourrage sec, en particulier un extrudat et/ou des flocons et/ou des mélanges de flocons, et/ou du fourrage en conserve et/ou des restes de table, en particulier des nouilles, et/ou du fourrage médicinal et/ou ajouter la matière de base de la sauce comme enrobage sur une matière de base du fourrage, en particulier par l'intermédiaire d'extrudats et/ou de flocons et/ou de la matière de base du fourrage et de la matière de base de la sauce dans un rapport de 10:1.

11. Utilisation selon l'une des revendications 1 à 10, **caractérisée en ce que** la base de la sauce est à utiliser pour les carnivores et/ou les omnivores, en particulier les chiens, les chats, les fouines, les furets, les miniporcs, les hérissons, les renards.
